# FASCICULE DE BREVET EUROPEEN

(11) **EP 2 336 661 B1**
(45) Date de publication et mention de la délivrance du brevet: **13.09.2017**
(21) Numéro de dépôt: 10195536.7
(22) Date de dépôt: 17.12.2010
(51) Int. Cl.: F24F 12/00

(54) **Unité, procédé et système de traitement d'air**
Luftaufbereitungseinheit, -verfahren und -system
Unit, method and system for treatment of air

(30) Priorité: 21.12.2009 BE 200900801
(43) Date de publication de la demande: 22.06.2011
(73) Titulaire: Cofely Services, 1000 Bruxelles (BE)
(72) Inventeur: Balon, Jérémy, 4020 Liege (BE)
(74) Mandataire: Cornuejols, Georges

(56) Documents cités:
- EP-A1- 0 055 000
- EP-A1- 0 909 926
- EP-A2- 0 294 730
- WO-A1-97/06390
- DE-A1- 3 027 447
- DE-U1- 20 101 676
- US-A1- 2009 210 096

## Description

La présente invention se rapporte au domaine du traitement d'air et de la climatisation de pièces destinées à contenir des systèmes électriques ou électroniques, comme par exemple du matériel informatique. L'invention s'adapte plus particulièrement à la climatisation de salles informatiques, contenant tous types de matériel informatique ou de télécommunications.

Les conditions de température et d'humidité acceptables pour des locaux informatiques ont été définies par l'ASHRAE (American Society of Heating, Refrigeration and Air Conditionning Engineers) comme suit :
- la température de la pièce doit être comprise entre 18°C et 27°C ;
- le point de rosée doit être compris entre 5,5°C et 16°C et l'humidité relative doit être au plus égale à 60%.

Les centres informatiques étant par nécessité opérationnels en permanence, 24h/24 et 7J/7, ils génèrent une consommation électrique importante et une émission de chaleur en conséquence. Pour respecter les contraintes de température données ci-dessus, le refroidissement de ces centres informatiques doit également fonctionner 24h/24, 7J/7. Afin de limiter au mieux la consommation énergétique d'un centre informatique, il est donc nécessaire de disposer d'un système de refroidissement efficient et énergétiquement économe.

Pour mesurer l'efficience énergétique d'un centre informatique, on mesure un paramètre couramment dénommé PUE (pour « Power Utilization Effectiveness », ou efficience énergétique). Le PUE se définit comme le rapport entre la consommation électrique totale du centre informatique et la consommation électrique réelle du matériel informatique, et est donc toujours plus grand que 1. Sa valeur varie usuellement entre 1,6 et 2,3 et se décompose approximativement de la manière suivante :
- matériel informatique : 1
- pertes dans la distribution électrique (transformateurs, onduleurs, ...) : entre 0,1 et 0,2
- climatisation de la salle informatique : entre 0,5 et 1
- divers (éclairage, sécurité,...) : entre 0,02 et 0,1

On voit donc que la climatisation représente une part importante de la consommation électrique globale d'un centre informatique, et qu'il existe un grand intérêt à diminuer fortement cette part dans l'optique de diminuer le PUE.

Le refroidissement des centres informatiques est classiquement réalisé en reprenant l'air de la salle informatique à travers un groupe de traitement d'air, en le refroidissant soit à l'aide d'une batterie alimentée en eau froide, soit à l'aide d'une batterie à détente directe et en pulsant de nouveau cet air refroidi dans la salle informatique.

Le refroidissement à l'aide d'une batterie à détente directe implique l'installation d'une unité extérieure au local comprenant les compresseurs et le condenseur du cycle frigorifique.

Le refroidissement à l'aide d'une batterie froide nécessite l'installation d'une centrale de production d'eau froide et d'un réseau de distribution de cette eau froide.

Actuellement, pour améliorer l'efficacité énergétique, les systèmes de climatisation mis en place privilégient l'utilisation de « Free-chilling » soit la production « gratuite » d'eau froide. Cela est réalisé en ajoutant des échangeurs et des tours de refroidissement dans la centrale de production d'eau froide. Ce qui - automatiquement - augmente les coûts d'installation et la complexité de l'installation.

La distribution de l'air dans la salle est généralement réalisée de la manière suivante :
- l'air refroidi est pulsé dans le faux-plancher de la salle informatique.
- La salle informatique est séparée en zones froides et zones chaudes.
- Des dalles perforées dans le faux-plancher situées dans les zones froides permettent à l'air froid d'être distribué dans ces zones froides.
- Les ventilateurs des serveurs, ordinateurs et autres matériels informatiques puisent de l'air dans ces zones froides et le font transiter à travers les composants électroniques des serveurs, ordinateurs ou autre matériel informatique. L'air se réchauffe au contact des ces composants électroniques et est rejeté dans les zones chaudes.
- L'air chaud situé dans les zones chaudes est repris par les unités de traitement d'air où il sera refroidi et à nouveau pulsé dans le faux-plancher.

De nombreux documents décrivent des solutions techniques ayant pour objectif de diminuer l'impact énergétique du refroidissement des salles informatiques, parmi lesquels les documents US 6,684,653, EP 2 082 635 et WO 03 073012. Les solutions connues présentent toutefois le point commun de refroidir l'air de la salle informatique en utilisant l'air extérieur, soit au moyen d'un échangeur air/air, soit au moyen d'un échangeur air/fluide (ou évaporateur), mais sans introduction d'air extérieur au sein de la salle. Ces solutions présentent donc l'inconvénient d'augmenter le coût de l'installation (en particulier du fait de la présence d'un échangeur), et de diminuer l'efficience énergétique du fait des pertes énergétiques causées par les échangeurs, qu'ils soient air/air ou air/fluide.

Le document US 2009/0210096 décrit un système de climatisation pour salle informatique mettant en oeuvre un système de climatisation utilisant en partie, sous certaines conditions de température et d'humidité, de l'air extérieur, prélevé à l'air libre. Le système de climatisation décrit dans ce document comprend une ou plusieurs unités de refroidissement, chacune couplée à un économiseur d'air. Le système comprend un module de contrôle qui détermine, en fonction de la température et de l'humidité de l'air extérieur, si celui-ci est exploitable pour le refroidissement de la salle. Dans le cas contraire, seule l'unité de refroidissement est mise en fonctionnement pour refroidir la salle. Si le module de contrôle détermine que l'air extérieur est utilisable pour le refroidissement de la salle, alors l'unité de refroidissement est mise à l'arrêt. Enfin, dans des conditions intermédiaires, la salle est refroidie à la fois par l'apport d'air extérieur et par le fonctionnement de l'unité de refroidissement, les contributions respectives de l'un et l'autre de ces modes de refroidissement étant variables. Si le principe d'utiliser de l'air extérieur lorsque sa température le permet constitue une piste intéressante, la solution proposée dans ce document apparait trop limitée. En particulier, les plages de température et d'humidité dans lesquelles l'air extérieur est considéré comme exploitable pour le refroidissement sont très limitées : par exemple, l'air extérieur ne sera utilisé que si sa température de point de rosée est comprise entre 44°F et 60°F, soit entre 7°C et 16°C. Or, plus on utilise l'air extérieur, moins le système de climatisation consomme d'énergie. D'une manière générale, la solution présentée dans ce document pose le principe de combiner une unité de refroidissement avec un économiseur d'air, mais sans optimiser l'économie d'énergie réalisable en exploitant au mieux les possibilités offertes par cette combinaison.

Le document EP 0 294 730 décrit un appareil aéraulique avec un système de volets commandés de sorte que l'appareil puisse fonctionner en mode purement « air de recirculation », en mode purement « air extérieur » ou en mode « mélange. Le document EP 0 055 000 décrit un dispositif pour aérer et chauffer des espaces intérieurs. Il comporte une conduite d'entrée d'air frais et une conduite de sortie d'air usé et un échangeur de chaleur air/air. Des ports ajustables sont prévus entre les conduites, en amont et en aval de l'échangeur de chaleur. Dans ces appareils, un nombre important de registres d'air est nécessaire. Les prises d'air et rejets d'air perpendiculaires au groupe de ventilation interdisent la juxtaposition d'unités les unes à côté des autres.

La présente invention se propose de pallier les inconvénients exposés ci-dessus afin d'améliorer l'efficience énergétique des systèmes de refroidissement de salle informatique. Dans ce but, l'invention consiste en une unité de refroidissement fonctionnant de manière autonome, sans utilisation d'un réseau général de production de froid (circuit d'eau froide ou autre), utilisant de l'air extérieur lorsque sa température le permet. L'invention permet de maximiser en toutes circonstances, quelle que soit la saison, la proportion d'utilisation de l'air extérieur. L'invention vise également à minimiser les pertes de charge aérauliques et les pertes énergétiques.

Ainsi, l'invention concerne une unité de traitement d'air d'une salle selon la revendication 1.

Dans une réalisation, l'unité de traitement d'air comprend des moyens permettant de réguler la proportion du mélange constituant l'air injecté de manière à ce que sa température soit sensiblement égale à la température de consigne de pulsion d'air Tₚ.

Dans une réalisation, l'unité de traitement d'air est pourvue d'un circuit frigorifique, le circuit frigorifique comprenant une batterie d'évaporation pour refroidir l'air à injecter, au moins un compresseur, et une batterie de condensation pour transférer la chaleur à évacuer vers l'air évacué à l'extérieur de la salle.

Dans une réalisation, les moyens de mélange de l'air à injecter comprennent une boite de mélange à plusieurs registres.

Dans une réalisation, la boite de mélange comprend :
- un premier registre pour mettre en communication un conduit de prélèvement de l'air libre et un conduit d'injection d'air dans la salle ;
- un deuxième registre pour mettre en communication un conduit de reprise de l'air de la salle avec le conduit d'injection d'air ;
- un troisième registre pour mettre en communication le conduit de reprise de l'air de la salle avec un conduit d'évacuation de l'air repris ;
- un quatrième registre pour mettre en communication le conduit d'évacuation de l'air repris avec le conduit de prélèvement de l'air extérieur.

Dans une réalisation, le conduit d'injection d'air intègre la batterie d'évaporation, les moyens de contrôle de l'humidité de l'air injecté et les moyens de pulsion d'air.

Dans une réalisation, le conduit d'évacuation de l'air repris intègre la batterie de condensation et les moyens d'extraction d'air.

Dans une réalisation, les premier, deuxième et troisième registres sont des registres à ouverture variable.

Dans une réalisation, le quatrième registre est un registre à ouverture de type « tout ou rien ».

Dans une réalisation, les moyens de contrôle de l'humidité comprennent un humidificateur adiabatique.

Dans une réalisation, les moyens de pulsion d'air et les moyens d'extraction d'air comprennent respectivement un ventilateur de pulsion et un ventilateur d'extraction à débit variable.

Dans une réalisation, la batterie de condensation et/ou la batterie d'évaporation est combinée à au moins un registre d'air permettant, en position ouverte, le contournement de ladite batterie par le flux d'air.

Dans une réalisation, l'unité de traitement d'air comprend des moyens de filtration de l'air extérieur.

L'invention concerne également un procédé de traitement d'air mettant en oeuvre au moins une unité de traitement d'air telle que définie ci-dessus, procédé dans lequel, lorsque la température de l'air extérieur Tₑₓₜ est inférieure à la température de consigne de pulsion d'air Tₚ :
- le quatrième registre est fermé ;
- les premier et troisième registres sont ouverts à un degré d'ouverture variable identique ;
- le deuxième registre est ouvert à un degré d'ouverture variable complémentaire du degré d'ouverture des premier et troisième registres ;
- de sorte que de l'air extérieur est mélangé à de l'air repris dans la salle, la proportion du mélange étant régulée de manière à ce que sa température soit sensiblement égale à la température de consigne de pulsion d'air Tₚ.

Dans une réalisation, la quantité d'air repris dans la salle qui n'est pas mélangée à l'air extérieur est rejetée à l'extérieur.

Dans une réalisation, lorsque la température de l'air extérieur est supérieure à la température de consigne de reprise de l'air de la salle Tᵣₑₚ, les premier et troisième registres sont fermés, les deuxième et quatrième registres sont ouverts à leur degré d'ouverture maximum, de sorte qu'aucune quantité d'air extérieur n'est injectée dans la salle, l'air repris dans la salle étant refroidi et intégralement recyclé, l'air extérieur étant utilisé pour évacuer la chaleur générée par les moyens de refroidissement de l'air repris dans la salle.

Dans une réalisation, lorsque la température Tₑₓₜ de l'air extérieur est supérieure à la température de consigne de pulsion d'air Tₚ et inférieure à la température de consigne de reprise de l'air de la salle Tᵣₑₚ, les premiers et troisième registres sont ouverts à leur degré d'ouverture maximum, les deuxième et quatrième registres étant fermés, de sorte que l'air extérieur est refroidi jusqu'à une température égale à la température de consigne de pulsion d'air Tₚ puis injecté dans la salle, l'air repris de la salle étant utilisé pour évacuer la chaleur générée par les moyens de refroidissement de l'air extérieur, puis rejeté à l'extérieur.

Dans une réalisation, l'extraction de l'air repris dans la salle est effectuée à un débit inférieur au débit de pulsion d'air extérieur, de sorte que les zones les plus froides de la salle soit à une pression supérieure aux zones les plus chaudes.

Enfin, l'invention concerne un système de traitement d'air d'une salle informatique, comprenant une pluralité d'unités de traitement d'air telles que définies ci-dessus, commandées par un module de gestion centralisée.

L'invention sera mieux comprise à la lecture de la description détaillée qui suit, description faite en référence aux figures annexées, parmi lesquelles :
- la figure 1 représente un schéma d'une unité de traitement d'air conforme à l'invention ;
- les figures 2 à 4 montrent l'unité de la figure 1 dans différentes configurations de fonctionnement ;
- la figure 5 représente une variante de réalisation de composants du système de la figure 1.

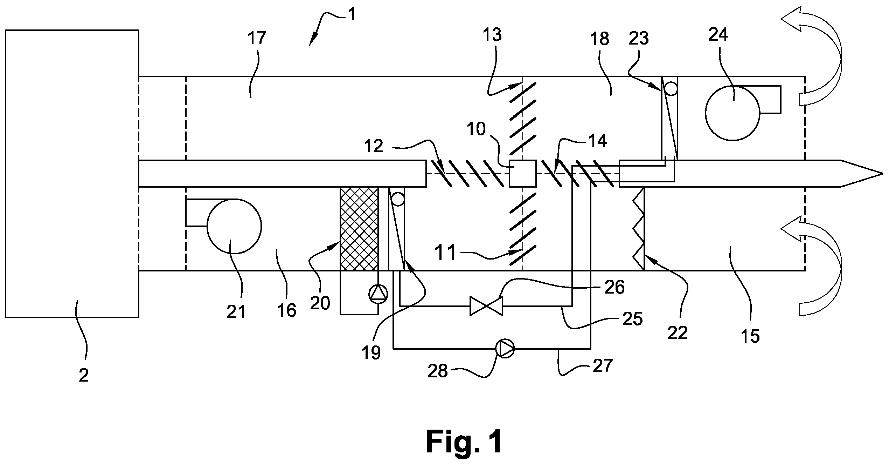

La figure 1 montre un exemple de réalisation d'une unité de traitement d'air 1 conforme à l'invention, permettant de traiter l'air d'une salle informatique 2. L'unité de traitement d'air 1 de la figure 1 comprend un conduit de reprise 17 de l'air chaud de la salle, par exemple en communication avec un faux plafond de la salle 2 comprenant des zones laissant passer l'air ; et un conduit d'injection d'air froid 16, par exemple en communication avec un faux plancher de la salle 2 comprenant des zones laissant passer l'air. L'unité de traitement d'air 1 comprend également un conduit de prélèvement d'air extérieur 15 et un conduit d'évacuation d'air 18.

Afin de mettre sélectivement en communication ces conduits 15, 16, 17, 18, l'unité 1 comprend une boite de mélange, ou boite à registres 10, pourvue de quatre registres 11, 12, 13 et 14. Le premier registre 11 est apte à mettre en communication le conduit de prélèvement d'air libre 15 avec le conduit d'injection d'air froid 16. Le deuxième registre 12 est apte à mettre en communication le conduit de reprise d'air 17 avec le conduit d'injection d'air 16. Le troisième registre 13 est apte à mettre en communication le conduit de reprise d'air 17 avec le conduit d'évacuation d'air 18. Enfin, le quatrième registre 14 est apte à mettre en communication le conduit d'évacuation d'air 18 avec le conduit de prélèvement d'air extérieur 15. Dans l'exemple, les trois premiers registres 11, 12, et 13 sont des registres modulants, c'est-à-dire à ouverture variable, tandis que le quatrième registre 14 est un registre à ouverture de type « tout ou rien ».

Le conduit d'injection d'air 16 comprend, de la boite de mélange 10 à son extrémité en communication avec la salle 2 :
- une batterie d'évaporation 19 d'un circuit frigorifique,
- des moyens pour contrôler l'humidité de l'air injecté dans la salle,
- un ventilateur de pulsion d'air 21 ;

Les moyens pour contrôler l'humidité de l'air injecté comprennent un humidificateur 20 permettant d'humidifier si nécessaire l'air devant être injecté sans lui apporter d'énergie, donc sans le réchauffer. Dans l'exemple, l'humidificateur 20 est un humidificateur de type adiabatique qui présente l'avantage de consommer peu d'énergie. Il peut être de type à pulvérisation, à spray, à ultrasons, à ruissellement...Si elle est nécessaire, la déshumidification de l'air sera réalisée par condensation de l'humidité lors du passage de l'air injecté à travers la batterie d'évaporation 19, ce qui ne nécessite pas de dispositif particulier.

Le conduit d'évacuation d'air 18 comprend, de la boite de mélange 10 à son extrémité en communication avec l'air libre :
- une batterie de condensation 23 ;
- un ventilateur d'extraction d'air 24.

La batterie de condensation 23 et la batterie d'évaporation 19 sont reliées par un premier conduit 25 comprenant une vanne de détente 26 et par un deuxième conduit 27 comprenant un compresseur frigorifique 28. Ces éléments constituent le circuit frigorifique de l'unité de traitement d'air 1.

Le conduit de prélèvement d'air libre 15 intègre quant à lui, en amont de la boite de mélange 10, un caisson de filtration 22, comprenant un ou plusieurs étages de filtre anti-poussières selon le niveau de filtration requis.

Conformément à l'invention, le principe d'utilisation de cette unité est de pulser l'air extérieur directement dans la salle lorsque sa température le permet, c'est-à-dire lorsque celle-ci est suffisamment basse pour assurer le refroidissement de la salle. Cette situation idéale ne pouvant bien entendu persister, on prévoit plusieurs modes de fonctionnement « saisonniers ». Dans l'exemple, on distingue trois modes de fonctionnement. Grâce au contrôle de l'humidité de l'air injecté, les modes de fonctionnement ne dépendent que de la température de l'air extérieur et en aucune manière de son humidité, ce qui permet de maximiser l'utilisation de l'air extérieur en toutes circonstances.

On désignera par la suite Tₑₓₜ la température de l'air extérieur, Tₚ la température de consigne de pulsion de l'air dans la salle informatique, Tᵣₑₚ la température de consigne de reprise de l'air de la salle informatique. La température de consigne de pulsion de l'air Tₚ et Tᵣₑₚ sont des paramètres fixés par l'utilisateur de la salle informatique.

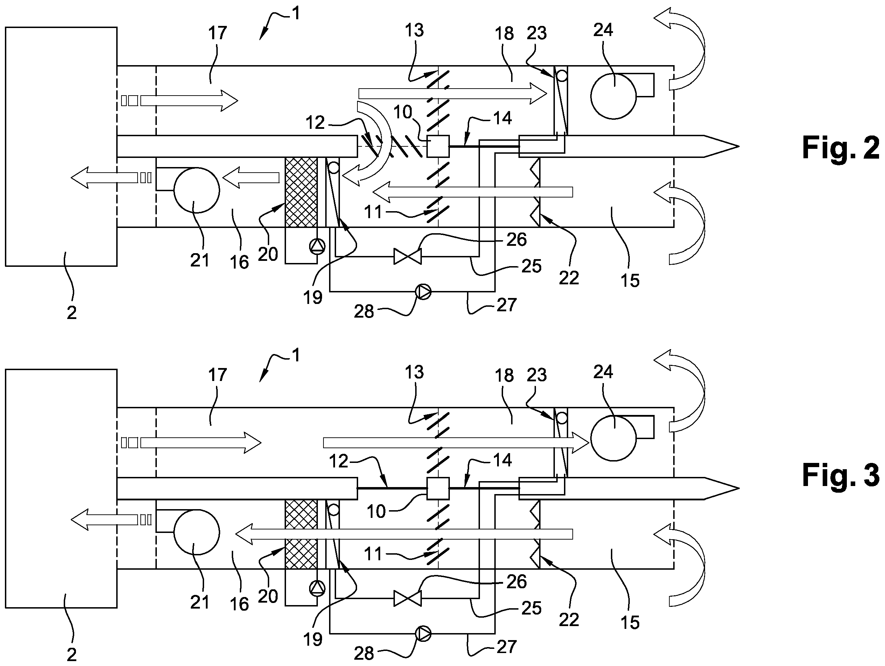

On décrit ci-après le premier de ces trois modes, en relation avec la figure 2, dénommé le mode « hiver », et qui est applicable lorsque Tₑₓₜ < Tₚ. Dans ce premier mode, les trois premiers registres 11, 12 et 13 ont une ouverture variable de 0 à 100%, tandis que le quatrième registre 14 est fermé. Dans le présent mode, les premier et troisième registres 11 et 13 auront toujours la même valeur d'ouverture tandis que le deuxième registre 12 aura une valeur d'ouverture complémentaire, c'est-à-dire égale à 100% moins la valeur d'ouverture du premier 11 ou troisième 13 registre.

Lorsque Tₑₓₜ est inférieure à Tₚ, le registre 12 s'ouvrira progressivement et les registres 11 et 13 se fermeront progressivement pour mélanger l'air extérieur à de l'air repris de la salle (qui est à une température plus élevée que l'air extérieur), dans une proportion variable. La proportion du mélange sera régulée de manière à garantir une température de pulsion sensiblement égale à Tₚ.

L'air extérieur est filtré à travers le caisson filtre 22 afin d'assurer la qualité d'air nécessaire, et il est ensuite mélangé à de l'air repris dans la boite à registres 10, traverse l'humidificateur 20 dans lequel il est humidifié si nécessaire, puis est pulsé dans la salle informatique 2 à l'aide du ventilateur de pulsion 21. Le ventilateur d'extraction 24 reprend la fraction d'air de la salle qui n'est pas re-circulé et le rejette à l'extérieur. Le circuit frigorifique 19, 23, 25-28, la batterie d'évaporation 19 et la batterie de condensation 23 sont à l'arrêt (ainsi que le compresseur 28) et ne consomment donc aucune énergie. L'humidificateur 20 permet à l'air pulsé dans la salle 2 d'être conforme aux exigences minimales d'humidité de l'ASHRAE évoquées plus haut. Pour une salle informatique située à une latitude correspondant à l'Europe occidentale, ce mode de fonctionnement, qui est le plus économe en énergie, est utilisé presque 80% de l'année.

On décrit ci-après, en relation avec la figure 3, le deuxième des trois modes, applicable lorsque Tₚ < Tₑₓₜ < Tᵣₑₚ, dénommé le mode « entre saison ». Dans ce mode, les premier et troisième registres 11 et 13 sont ouverts à 100%, les deuxième et quatrième registres 12 et 14 sont fermés. L'air extérieur traverse le conduit de prélèvement 15 et le caisson filtre 22, la batterie d'évaporation 19 où il est refroidi de manière à pulser l'air dans la salle 2 à une température Tₚ. L'air est pulsé dans la salle informatique 2 par le ventilateur de pulsion 21. La puissance du circuit frigorifique 19, 23, 25-28 est régulée de manière à fournir la puissance frigorifique nécessaire à la batterie d'évaporation 19. L'air chaud de la salle 2 est repris par le ventilateur d'extraction 24, traverse la batterie de condensation 23 qu'il refroidit puis est rejeté à l'extérieur.

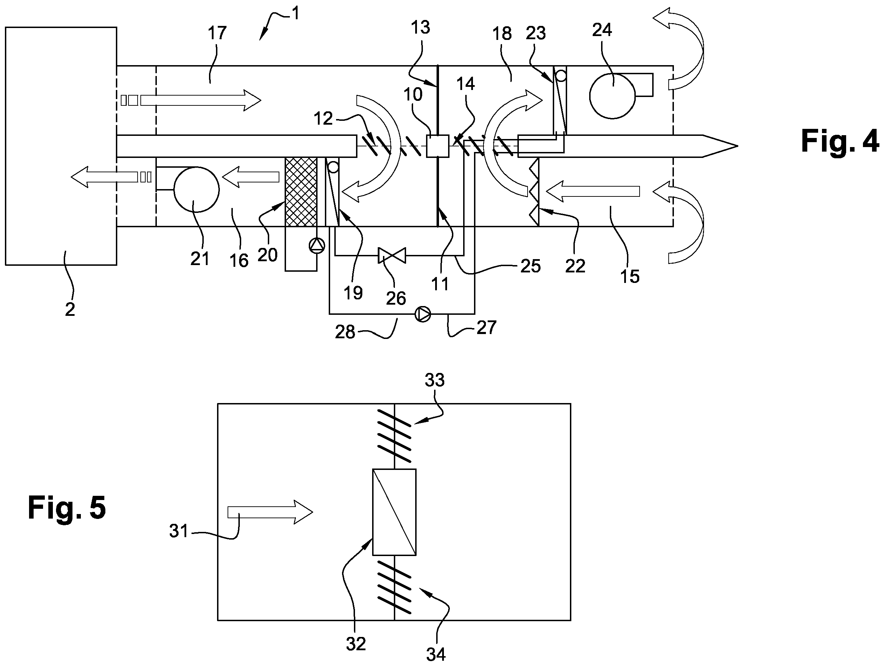

Enfin, on décrit ci-après, en relation avec la figure 4, le dernier des trois modes mis en oeuvre dans l'exemple, le mode « été », qui est applicable lorsque Tₑₓₜ > Tᵣₑₚ. Dans ce mode, les registres 11 et 13 sont fermés, tandis que le deuxième registre 12 est ouvert à 100%. L'air repris dans la salle est ainsi entièrement recyclé, circulant à travers le conduit de reprise d'air 17 et le circuit d'injection 16. L'air repris est refroidi à travers la batterie d'évaporation 19. L'air extérieur circule du conduit de prélèvement 15 au conduit d'évacuation 18, servant ainsi à évacuer la chaleur disponible dans la batterie de condensation 23. Ce fonctionnement n'est utilisé, à des latitudes moyennes de l'Europe occidentale, que quelques heures par an. Il correspond au mode de fonctionnement classique des armoires de climatisation de salle informatique décrit précédemment.

Dans une variante, les ventilateurs de pulsion 21 et d'extraction 24 sont équipés de variateurs de fréquence afin de pouvoir moduler leurs débits, ce qui permet d'adapter le débit d'air fourni à celui demandé par la salle informatique et de garantir, à tout moment, la surpression dans la salle informatique. Le débit du ventilateur de pulsion 21 sera avantageusement régulé en fonction de la charge thermique dans la salle informatique. Le débit du ventilateur d'extraction 24 sera quant à lui avantageusement régulé de manière à assurer en permanence une surpression relative des zones froides de la salle informatique par rapport aux zones chaudes, par exemple de l'ordre de 5 à 10 Pascal. Il s'agit là d'un des nombreux avantages de l'invention par rapport aux systèmes classiques : garantir via la surpression dans les zones froides, que l'air froid est disponible partout dans la salle informatique.

Comme on l'a vu au travers de la description qui précède, l'unité de traitement d'air selon l'invention permet d'utiliser l'air extérieur directement pour refroidir la salle informatique, tout au long de l'année, et quelle que soit l'humidité extérieure, et dans des plages de température très larges. En effet, une valeur classique de la température de consigne de reprise d'air sera 30°. Or, comme explicité plus haut, l'air extérieur sera utilisé dès que sa température est inférieure à la température de consigne de reprise d'air, dans cet exemple 30°C. En outre, l'unité de traitement d'air utilisée dans son mode le plus économique (le mode hiver), dès que la température de l'air extérieur sera inférieure à la température de consigne de pulsion d'air, dont une valeur conventionnelle est par exemple de 18°C. Si l'on compare ces valeurs à la température moyenne annuelle de la ville de Paris, proche de 12°C, on voit que dans un grand nombre de zones géographiques, l'air extérieur sera exploitable dans le cadre de l'invention quasiment toute l'année, avec les économies d'énergie qui en découlent.

D'autre part, l'unité de traitement d'air fournie par l'invention constitue une unité entièrement autonome et indépendante : elle ne nécessite aucune installation annexe (centrale de production d'eau glacée, réseau de tuyauterie). Il suffit juste de la disposer à l'extérieur de la salle qu'elle doit refroidir, préférentiellement à l'extérieur du bâtiment, et de raccorder le conduit d'injection et le conduit d'évacuation à la salle. Elle permet, tout en respectant les conditions préconisées par l'ASHRAE (quelles que soient la température et l'humidité extérieures), d'obtenir des résultats d'efficacité énergétique irréalisables par des moyens classiques : l'invention permet d'atteindre facilement un PUE de l'ordre de 1,15. Le coût total de construction et d'exploitation de la salle informatique sur sa durée de vie entière s'en trouve très fortement réduit. L'invention présente de nombreux avantages, parmi lesquels on peut citer :
- la modularité : étant donné le caractère autonome et indépendant de la solution proposée, elle permet une grande modularité dans les salles informatiques. En effet, lors de la construction d'une nouvelle salle, les unités de refroidissement peuvent être installées au fur et à mesure du déploiement informatique, et donc de l'augmentation de la charge thermique de la salle informatique. Seul le génie civil doit être prévu d'origine. Avec une solution classique, le réseau de distribution de l'eau (entre autres) doit être prévu d'origine pour la puissance maximale de la salle informatique. Ce n'est plus le cas avec l'invention, ce qui entraîne une réduction et un étalement des coûts sur la durée de vie du centre informatique, et garantit qu'une dépense est générée uniquement lorsque le besoin est présent.
- La facilité de maintenance : étant donné que le refroidissement de la salle informatique est réalisé par la juxtaposition de plusieurs unités de traitement standardisées et identiques (dont le nombre est fonction de la puissance de la salle informatique), le dépannage et les interventions sur l'installation en sont facilitées. Comme plus de 80% des pannes dans les salles informatiques sont d'origine humaine, on favorise ainsi une augmentation de la fiabilité de la salle informatique.

Par ailleurs, la disposition des prises d'air et rejets d'air parallèle au groupe de ventilation, c'est-à-dire sur une face ou deux faces opposées comme illustré en figures 2 à 4, et non sur les faces latérales, permet la juxtaposition d'unités les unes à côté des autres, ce qui permet de garantir un certain niveau de redondance.

On décrit ci-après, en relation avec la figure 5, une variante de réalisation de l'invention, qui permet d'encore améliorer l'efficacité énergétique du système. Cette variante met en oeuvre une conception spécifique des batteries de condensation 19 et d'évaporation 23. La figure 5 est un schéma d'un caisson de batterie 30, qui comprend les éléments suivants :
- une batterie (d'évaporation ou de condensation) 32,
- au moins un registre d'air, dans l'exemple deux registres 33 et 34 disposés de part et d'autre de la batterie 32.

Le flux d'air est représenté par la flèche 31. La conception de la présente variante part de la constatation que les batteries d'évaporation et de condensation peuvent être inutilisées près de 80% du temps. Or, celles-ci sont responsables d'une perte de charge aéraulique importante, qui doit être compensée par le ventilateur (de pulsion ou d'extraction selon le cas), ce qui induit une consommation électrique par ce ventilateur. Or, dans une unité de traitement conforme à l'invention, la consommation des deux ventilateurs (pulsion et extraction) représente plus de 75% de la consommation électrique totale du système. Il y a donc un grand intérêt énergétique à diminuer les pertes de charges aérauliques partout où cela est possible.

La solution proposée par la présente variante consiste à contourner la batterie 32 lorsque celle-ci est inutilisée (soit 80% du temps), en ouvrant les registres 33 et 34 qui permettent ainsi au flux d'air d'éviter la batterie. La perte de charge équivalente dans cette configuration est quasi nulle. Bien entendu, lorsque la batterie est utilisée (mode « entre-saison » et mode « été »), les registres 33 et 34 sont fermés et obligent l'air à traverser la batterie 32.

Dans le cas où la taille d'une salle informatique et/ou sa charge thermique nécessitera l'installation de plusieurs unités de traitement d'air conforme à l'invention, celles-ci seront avantageusement commandées par un module de gestion centralisée, notamment dans le but que des unités ne fonctionnent de manière contre-productive. On évitera ainsi par exemple qu'une unité humidifie l'air de salle tandis qu'une unité voisine tente de le déshumidifier.

On note que, dans des modes de réalisation, on combine les modes de réalisation décrits ci-dessus. On réalise ainsi, par exemple, un Unité de traitement d'air d'une salle, notamment d'une salle informatique, comprenant :
- des moyens de pulsion d'air pour injecter à l'intérieur de la salle de l'air à une température de consigne de pulsion d'air Tₚ prédéfinie ;
- des moyens pour refroidir l'air à injecter si sa température est supérieure à la température de consigne de pulsion d'air Tₚ,
- des moyens, similaires au moyen 10, pour mélanger de l'air extérieur, prélevé à l'air libre, avec de l'air repris dans la salle de sorte que l'air à injecter dans la salle comprend :
   - uniquement de l'air repris dans la salle lorsque la température de l'air extérieur Tₑₓₜ est supérieure à une température de consigne de reprise de l'air de la salle Tᵣₑₚ prédéfinie strictement supérieure à la température de consigne de pulsion d'air Tₚ ;
   - de l'air extérieur mélangé à de l'air repris dans la salle lorsque la température de l'air extérieur Tₑₓₜ est inférieure à la température de consigne de pulsion d'air Tₚ et
   - de l'air extérieur uniquement lorsque la température de l'air extérieur Tₑₓₜ est comprise entre la température de consigne de reprise de l'air de la salle Tᵣₑₚ prédéfinie et la température de consigne de pulsion d'air Tₚ ;
- des moyens pour contrôler l'humidité de l'air injecté dans la salle ;
- des moyens d'extraction d'air pour évacuer à l'extérieur l'air repris dans la salle lorsque la température de celui-ci est supérieure à une température de consigne de reprise de l'air de la salle Tᵣₑₚ prédéfinie ; et
- des moyens pour rejeter la chaleur générée par les moyens de refroidissement de l'air à injecter via l'air évacué à l'extérieur.

Ce mode de réalisation présente l'avantage que l'air extérieur peut être exploitable pendant une plus grande partie de l'année qu'avec les systèmes connus dans l'art antérieur.

## Revendications

1. Unité de traitement d'air (1) d'une salle, notamment d'une salle informatique (2), comportant :
- un premier registre (11) pour mettre en communication un conduit de prélèvement (15) d'air à l'extérieur de la salle et un conduit d'injection (16) d'air dans la salle (2) ;
- un deuxième registre (12) pour mettre en communication un conduit de reprise (17) de l'air de la salle (2) avec un conduit d'injection d'air (16) dans la salle ;
- des moyens (10) d'ouverture et de fermeture des premier et deuxième registres permettant de réguler la proportion d'un mélange d'air extérieur, prélevé à l'air libre, et d'air repris dans la salle, l'air à injecter dans la salle comprenant :
• uniquement de l'air repris dans la salle lorsque la température de l'air extérieur Tₑₓₜ est supérieure à une température de consigne de reprise de l'air de la salle Tᵣₑₚ prédéfinie ;
• de l'air extérieur mélangé à de l'air repris dans la salle lorsque la température de l'air extérieur Tₑₓₜ est, d'une part, inférieure à la température de consigne de reprise de l'air de la salle Tᵣₑₚ prédéfinie et, d'autre part, inférieure à une température de consigne de pulsion d'air Tₚ ; la proportion d'air extérieur et d'air repris dans la salle donnant au mélange d'air la température de consigne de pulsion d'air Tₚ et
• uniquement de l'air extérieur lorsque la température de l'air extérieur Tₑₓₜ est, d'une part, inférieure à la température de consigne de reprise de l'air de la salle Tᵣₑₚ et, d'autre part, supérieure à la température de consigne de pulsion d'air Tₚ ;
- des moyens (19) pour refroidir l'air à injecter dans la salle uniquement lorsque la température de l'air extérieur Tₑₓₜ est supérieure à la température de consigne de pulsion d'air Tₚ ;
- des moyens (24) d'extraction d'air pour rejeter à l'extérieur la fraction d'air de la salle qui n'est pas re-circulé,
- des moyens (23) pour rejeter la chaleur générée par les moyens de refroidissement de l'air à injecter via l'air évacué à l'extérieur ;
- des moyens de pulsion d'air (21) pour injecter l'air à injecter à l'intérieur de la salle (2) et
- des moyens (20) pour contrôler l'humidité de l'air injecté dans la salle ;

2. Unité de traitement d'air selon la revendication 1, dans lequel les moyens (19) pour refroidir l'air à injecter dans la salle comporte une batterie d'évaporation et au moins un compresseur (28) d'un circuit frigorifique (19, 23, 25, 26, 27, 28), pour refroidir l'air à injecter, et dans lequel les moyens pour rejeter la chaleur générée par les moyens de refroidissement comportent une batterie de condensation (23) pour transférer la chaleur à évacuer vers l'air évacué à l'extérieur de la salle.

3. Unité de traitement d'air selon l'une des revendications 1 ou 2 qui comporte une boite de mélange (10) qui comporte les premier et deuxième registres et :
- un troisième registre (13) pour mettre en communication le conduit de reprise (17) de l'air de la salle avec un conduit d'évacuation (18) de l'air repris ;
- un quatrième registre (14) pour mettre en communication le conduit d'évacuation (18) de l'air repris avec le conduit de prélèvement (15) de l'air extérieur.

4. Unité de traitement d'air selon la revendication 2 ou les revendications 2 et 3, dans laquelle le conduit d'injection (16) d'air intègre la batterie d'évaporation (19), les moyens de contrôle de l'humidité (20) de l'air injecté et les moyens de pulsion d'air (21).

5. Unité de traitement d'air selon la revendication 2 et la revendication 3, dans laquelle le conduit d'évacuation (18) de l'air repris intègre la batterie de condensation (23) et des moyens d'extraction d'air (24).

6. Unité de traitement d'air selon la revendication 3 ou l'une des revendications 4 ou 5 lorsqu'elles dépendant de la revendication 3, dans laquelle les premier, deuxième et troisième registres (11, 12, 13) sont des registres à ouverture variable et le quatrième registre (14) est un registre à ouverture de type « tout ou rien ».

7. Unité de traitement d'air selon la revendication 2 ou l'une des revendications 3 à 6 lorsqu'elles dépendent de la revendication 2, dans lequel la batterie de condensation est combinée à au moins un registre d'air (33, 34), permettant, en position ouverte, le contournement de ladite batterie par le flux d'air.

8. Unité de traitement d'air selon la revendication 2 et l'une des revendications 3 à 7 lorsqu'elles dépendant de la revendication 2, dans lequel la batterie d'évaporation (19, 23, 32) est combinée à au moins un registre d'air (33, 34), permettant, en position ouverte, le contournement de ladite batterie par le flux d'air.

9. Unité de traitement d'air selon l'une des revendications 1 à 8, dans laquelle les moyens de contrôle de l'humidité comprennent un humidificateur adiabatique (20).

10. Procédé de traitement d'air mettant en oeuvre au moins une unité de traitement d'air selon la revendication 3 ou l'une des revendications 4 à 8 lorsqu'elles dépendent de la revendication 3, procédé dans lequel, lorsque la température de l'air extérieur Tₑₓₜ est inférieure à la température de consigne de pulsion d'air Tₚ :
- le quatrième registre (14) est fermé ;
- les premier et troisième registres (11, 13) sont ouverts à un degré d'ouverture variable identique ;
- le deuxième registre (12) est ouvert à un degré d'ouverture variable complémentaire du degré d'ouverture des premier et troisième registres (11, 13),
- de sorte que de l'air extérieur est mélangé à de l'air repris dans la salle, la proportion du mélange étant régulée de manière à ce que sa température soit sensiblement égale à la température de consigne de pulsion d'air Tₚ.

11. Procédé de traitement d'air selon la revendication 10, dans lequel la quantité d'air repris dans la salle qui n'est pas mélangée à l'air extérieur est rejetée à l'extérieur.

12. Procédé de traitement d'air selon l'une des revendications 10 et 11, dans lequel, lorsque la température de l'air extérieur est supérieure à la température de consigne de reprise de l'air de la salle Tᵣₑₚ, les premier et troisième registres (11, 13) sont fermés, les deuxième et quatrième registres (12, 14) sont ouverts à leur degré d'ouverture maximum, de sorte qu'aucune quantité d'air extérieur n'est injectée dans la salle, l'air repris dans la salle étant refroidi et intégralement recyclé, l'air extérieur étant utilisé pour évacuer la chaleur générée par les moyens de refroidissement de l'air repris dans la salle.

13. Procédé de traitement d'air selon l'une des revendications 10 à 12, dans lequel, lorsque la température Tₑₓₜ de l'air extérieur est supérieure à la température de consigne de pulsion d'air Tₚ et inférieure à la température de consigne de reprise de l'air de la salle Tᵣₑₚ, les premiers et troisième registres (11, 13) sont ouverts à leur degré d'ouverture maximum, les deuxième et quatrième registres (12, 14) étant fermés, de sorte que l'air extérieur est refroidi jusqu'à une température égale à la température de consigne de pulsion d'air Tₚ puis injecté dans la salle (2), l'air repris de la salle étant utilisé pour évacuer la chaleur générée par les moyens de refroidissement de l'air extérieur, puis rejeté à l'extérieur.

14. Procédé de traitement d'air selon l'une des revendications 10 à 13, dans lequel l'extraction de l'air repris dans la salle est effectuée à un débit inférieur au débit de pulsion d'air extérieur, de sorte que les zones les plus froides de la salle soit à une pression supérieure aux zones les plus chaudes.

15. Système de traitement d'air d'une salle informatique (2), comprenant une pluralité d'unités de traitement d'air (1) selon l'une des revendications 1 à 9, commandées par un module de gestion centralisée.

## Patentansprüche

1. Luftaufbereitungsanlage (1) eines Raumes, insbesondere eines Computerraums (2), einschließlich:
- eines ersten Drosselschiebers (11) zur Herstellung einer Verbindung zwischen einem Entnahmerohr (15) für Luft außerhalb des Raumes und einem Lufteinblasrohr (16) im Raum (2);
- eines zweiten Drosselschiebers (12) zur Herstellung einer Verbindung zwischen einem Abluftrohr (17) des Raumes (2) und einem Lufteinblasrohr (16) im Raum;
- der Elemente (10) zum Öffnen und Schließen des ersten und des zweiten Drosselschiebers, die eine Regulierung des Mischungsverhältnisses der Außenluft, die der Frischluft entnommen wurde, und der Abluft im Raum ermöglichen, die in den Raum einzuleitende Luft, einschließlich:
• ausschließlich der Abluft im Raum, wenn die Temperatur der Außenluft Text höher ist als eine vordefinierte Soll-Temperatur der Abluft des Raumes Tᵣₑₚ;
• der Außenluft gemischt mit der Abluft im Raum, wenn die Temperatur der Außenluft Tₑₓₜ einerseits niedriger als die vordefinierte Soll-Temperatur der Abluft des Raums Tᵣₑₚ und andererseits niedriger als die Soll-Temperatur der Umluft T_{P} ist; das Verhältnis von Außenluft und Abluft im Raum gibt dem Luftgemisch die Soll-Temperatur der Umluft T_{P} und
• ausschließlich der Außenluft, wenn die Temperatur der Außenluft Tₑₓₜ einerseits niedriger als die Soll-Temperatur der Abluft im Raum Tᵣₑₚ und andererseits höher als die Soll-Temperatur der Umluft T_{P} ist;
- Elemente (19) zur Kühlung der in den Raum einzuleitenden Luft, ausschließlich wenn die Temperatur der Außenluft Tₑₓₜ höher ist als die Soll-Temperatur der Umluft Tₚ;16
- Elemente (24) zum Ausblasen der Luft, um den Teil der Luft im Raum, der nicht erneut dem Luft-Kreislauf zugeführt wird, nach außen abzugeben.
- Elemente (23) zum Abführen der Wärme, die von den Elementen zur Kühlung der einzuleitenden Luft erzeugt wird, über die nach außen abgeführte Luft.
- Elemente der Umluft (21), um die einzuleitende Luft in das Innere des Raumes (2) einzuleiten und
- Elemente (20) zur Kontrolle der Feuchtigkeit der in den Raum eingeleiteten Luft;

2. Luftaufbereitungsanlage nach Forderung 1, in der die Elemente (19) zur Kühlung der in den Raum einzuleitenden Luft ein Klimagerät umfasst und mindestens einen Kompressor (28) in einem Kühlkreislauf (19, 23, 25, 26, 27, 28) zur Kühlung der einzuleitenden Luft, in dem die Elemente zum Abführen der Wärme, die von den Kühlelementen erzeugt wird, ein Klimagerät (23) zur Wärmeübertragung mit einschließen, die an die bereits abgeführte Luft außerhalb des Raumes abgegeben werden soll.

3. Luftaufbereitungsanlage nach einer der Forderungen 1 oder 2, die einen Luftmischbehälter (10), der wiederum der erste und der zweite Drosselschieber mit einschließt:
- ein dritter Drosselschieber (13) zur Herstellung einer Verbindung zwischen dem Abluftkanal (17) im Raum und einem Ausleitungskanal (18) der Abluft;
- Ein vierter Drosselschieber (14) zur Herstellung einer Verbindung zwischen dem Ausleitungskanal (18) für Abluft mit dem Entnahmerohr (15) für die Außenluft.

4. Luftaufbereitungsanlage nach Forderung 2 oder den Forderungen 2 und 3, in der im Lufteinblasrohr (16) das Klimagerät (19), die Elemente zur Kontrolle der Feuchtigkeit (20) der Umluft und die Elemente der Umluft (21) integriert sind.17

5. Luftaufbereitungsanlage nach Forderung 2 und Forderung 3, in der im Ausleitungskanal (18) der Abluft das Klimagerät (23) und Elemente zur Entlüftung (24) integriert sind.

6. Luftaufbereitungsanlage nach Forderung 3 oder einer der Forderungen 4 oder 5, wenn sie abhängig von Forderung 3 sind, in der der erste, zweite und dritte Drosselschieber (11, 12, 13) zum stufenlos verstellbaren Öffnen und der vierte Drosselschieber (14) ein Drosselschieber zum vollständigen Öffnen oder Schließen ist.

7. Luftaufbereitungsanlage nach Forderung 2 oder nach einer der Forderungen 3 bis 6, wenn sie von Forderung 2 abhängig sind, in der das Klimagerät mit mindestens einem Drosselschieber für die Luft (33, 34) kombiniert ist, die bei geöffneter Stellung die Umgehung des erwähnten Klimageräts durch den Luftstrom erlaubt.

8. Luftaufbereitungsanlage nach Forderung 2 und einer der Forderungen 3 bis 7, wenn sie von Forderung 2 abhängig sind, in der das Klimagerät (19, 23, 32) mit mindestens einem Drosselschieber für die Luft (33, 34) kombiniert ist, die bei geöffneter Stellung die Umgehung des erwähnten Klimageräts durch den Luftstrom erlaubt.

9. Luftaufbereitungsanlage nach den Forderungen 1 bis 8, in der die Elemente zur Kontrolle der Feuchtigkeit einen adiabaten Befeuchter (20) enthalten.

10. Verfahren zur Luftaufbereitung, das mindestens eine Luftaufbereitungsanlage nach Forderung 3 oder einer der Forderungen 4 bis 8 in Bewegung setzt, wenn sie von der Forderung 3 abhängig sind, Verfahren, in welchem, wenn die Temperatur der Außenluft Tₑₓₜ niedriger ist als die Soll-Temperatur der Umluft Tₚ:
- der vierte Drosselschieber (14) ist geschlossen;
- der erste und der dritte Drosselschieber (11, 13) sind bis zu einem identischen Öffnungsgrad geöffnet;18
- der zweite Drosselschieber (12) ist bis zu einem zum Öffnungsgrad des ersten und des dritten Drosselschiebers zusätzlichen verstellbaren Öffnungsgrad (11, 13) geöffnet,
- so dass die Außenluft mit der Abluft im Raum gemischt wird, das Mischungsverhältnis wird dabei so reguliert, dass dessen Temperatur genau gleich mit der Soll-Temperatur der Umluft T_{P} ist.

11. Verfahren zur Luftaufbereitung nach Forderung 10, in der die Abluftmenge im Raum, die nicht mit der Außenluft vermischt wird, nach außen abgeführt wird.

12. Verfahren zur Luftaufbereitung nach einer der Forderungen 10 und 11, in der, wenn die Temperatur der Außenluft höher ist als die Soll-Temperatur der Abluft im Raum Tᵣₑₚ, der erste und der dritte Drosselschieber (11, 13) geschlossen werden, der zweite und der vierte Drosselschieber (12, 14) bis zu deren maximalen Öffnungsgrad geöffnet werden, so dass keine Außenluft in den Raum geblasen wird, wobei die Abluft im Raum gekühlt und vollständig aufbereitet wird und die Außenluft zum Abführen der Wärme verwendet wird, die von den Elementen zum Kühlen der Abluft im Raum erzeugt wird.

13. Verfahren zur Luftaufbereitung nach einer der Forderungen 10 bis 12, in der, wenn die Temperatur der Außentemperatur Text höher als die Soll-Temperatur der Umluft T_{P} und niedriger als die Soll-Temperatur der Abluft im Raum Tᵣₑₚ ist, der erste und der dritte Drosselschieber (11,13) bis zu deren maximalen Öffnungsgrad, wobei der zweite und der vierte Drosselschieber geschlossen werden, so dass die Außenluft bis auf die gleiche Temperatur wie die Soll-Temperatur der Umluft Tₚ abgekühlt und dann in den Raum (2) geblasen wird und die Abluft im Raum dazu verwendet wird, die Wärme abzuführen, die durch die Elemente zur Kühlung der Außenluft erzeugt wird, und dann nach außen abgegeben wird.

14. Verfahren zur Luftaufbereitung nach einer der Forderungen 10 bis 13, in der das Ausblasen der Abluft im Raum in einem geringeren Durchfluss erfolgt als der Durchfluss beim Einblasen der Außenluft, so dass die kältesten Bereiche im Raum unter einem höheren Druck stehen als die wärmsten Bereiche.

15. System zur Luftaufbereitung für einen Computerraum (2), einschließlich einer Vielzahl an Luftaufbereitungsanlagen (1) nach einer der Forderungen 1 bis 9, die durch ein zentrales Steuerungsmodul gesteuert werden.

## Claims

1. Air handling unit (1) for a room, in particular a computer room (2), comprising:
- a first damper (11) to connect an air intake duct (15) outside the room and an air injection duct (16) inside the room (2);
- a second damper (12) to connect a duct (17) for removing air from the room (2) and an air injection duct (16) inside the room;
- means (10) for opening and closing first and second dampers to regulate the proportions in a mixture of outside air, collected from the open air, and air removed from the room, the air to be injected into the room comprising:
• only air removed from the room when the temperature of the outside air, Tₑₓₜ, is above a predefined temperature setpoint for removing air from the room, Tᵣₑₚ;
• outside air mixed with air removed from the room when the temperature of the outside air, Tₑₓₜ, is, firstly, below the predefined temperature setpoint for removing air from the room, Tᵣₑₚ, and, secondly, below an air movement temperature setpoint, Tₚ; the proportion of outside air and air removed from the room giving the air mixture the air movement temperature setpoint, Tₚ; and
• only outside air when the temperature of the outside air, Tₑₓₜ, is, firstly, below the temperature setpoint for removing air from the room, Tᵣₑₚ, and, secondly, above the air movement temperature setpoint, Tₚ;
- means (19) for cooling the air to be injected into the room, only when the temperature of the outside air, Tₑₓₜ, is above the air movement temperature setpoint, Tₚ;
- means (24) for extracting air in order to reject to the outside the fraction of the room's air that is not recirculated;
- means (23) for rejecting the heat generated by the means for cooling the air to be injected via the air evacuated to the outside;
- air movement means (21) for injecting the air to be injected into the inside of the room (2); and
- means (20) for controlling the humidity of the air injected into the room.

2. Air handling unit according to claim 1, wherein the means (19) for cooling the air to be injected into the room comprises an evaporation unit and at least one compressor (28) of a refrigeration circuit (19, 23, 25, 26, 27, 28), for cooling the air to be injected, and wherein the means for rejecting the heat generated by the cooling means comprise a condensing unit (23) for transferring the heat to be evacuated to the air evacuated to the outside of the room.

3. Air handling unit according to one of claims 1 or 2, which comprises a mixing box (10) which comprises the first and second dampers, and:
- a third damper (13) to connect the duct (17) for removing air from the room and a duct (18) for evacuating the removed air;
- a fourth damper (14) to connect the duct (18) for evacuating the removed air and the intake duct (15) for the outside air.

4. Air handling unit according to claim 2 or claims 2 and 3, wherein the air injection duct (16) incorporates the evaporation unit (19), the means (20) for controlling the humidity of the injected air, and the air movement means (21).

5. Air handling unit according to claim 2 and claim 3, wherein the duct (18) for evacuating the removed air incorporates the condensing unit (23), and air extraction means (24).

6. Air handling unit according to claim 3, or according to one of claims 4 or 5 when they are dependent on claim 3, wherein the first, second and third dampers (11, 12, 13) are adjustable opening dampers, and the fourth damper (14) is an "all or nothing" opening type of damper.

7. Air handling unit according to claim 2, or according to one of claims 3 to 6 when they are dependent on claim 2, wherein the condensing unit is combined with at least one air damper (33, 34), allowing, in the open position, the air flow to bypass said unit.

8. Air handling unit according to claim 2 and one of claims 3 to 7 when they are dependent on claim 2, wherein the evaporation unit (19, 23, 32) is combined with at least one air damper (33, 34), allowing, in the open position, the air flow to bypass said unit.

9. Air handling unit according to one of claims 1 to 8, wherein the humidity control means comprise an adiabatic humidifier (20).

10. Air handling method utilizing at least one air handling unit according to claim 3, or according to one of claims 4 to 8 when they are dependent on claim 3, method wherein, when the temperature of the outside air, Tₑₓₜ, is below the air movement temperature setpoint, Tₚ:
- the fourth damper (14) is closed;
- the first and third dampers (11, 13) are open to an identical variable degree of opening;
- the second damper (12) is open to a degree of opening complementary to the degree of opening of the first and third dampers (11, 13),
- such that outside air is mixed with air removed from the room, the proportion of the mixture being regulated so that its temperature is substantially equal to the air movement temperature setpoint, Tₚ.

11. Air handling method according to claim 10, wherein the amount of air removed from the room that is not mixed with the outside air is rejected to the outside.

12. Air handling method according to one of claims 10 and 11, wherein, when the temperature of the outside air is above a temperature setpoint for removing air from the room, Tᵣₑₚ, the first and third dampers (11, 13) are closed, the second and fourth dampers (12, 14) are open to their maximum degree of opening, such that no amount of outside air is injected into the room, the air removed from the room being cooled and completely recycled, the outside air being used to evacuate the heat generated by the means for cooling the air removed from the room.

13. Air handling method according to one of claims 10 to 12, wherein, when the temperature Tₑₓₜ of the outside air is above the air movement temperature setpoint, Tₚ, and below the temperature setpoint for removing air from the room, Tᵣₑₚ, the first and third dampers (11, 13) are open to their maximum degree of opening, the second and fourth dampers (12, 14) being closed, such that the outside air is cooled to a temperature equal to the air movement temperature setpoint, Tₚ, and then injected into the room (2), the air removed from the room being used to evacuate the heat generated by the means for cooling the outside air, and then rejected to the outside.

14. Air handling method according to one of claims 10 to 13, wherein the air removed from the room is extracted at a flow rate less than the outside air movement flow rate, such that the coldest areas of the room have a higher pressure than the warmest areas.

15. Air handling system for a computer room (2), comprising a plurality of air treatment units (1) according to one of claims 1 to 9, controlled by a centralized management module.
